# EUROPEAN PATENT APPLICATION

(11) **EP 4 817 984 A1**
(43) Date of publication of application: **07.10.2026**
(21) Application number: 26170577.6
(22) Date of filing: 02.04.2026
(51) Int. Cl.: B60W 40/09, G06Q 40/08, G06Q 50/43, G07C 5/08

(54) **METHOD AND SYSTEM FOR DETECTING AND MONITORING THE DRIVING BEHAVIOR OF A VEHICLE DRIVER**

(30) Priority: 04.04.2025 IT 202500007347
(71) Applicant: Wego S.r.l., 36100 Vicenza (IT)
(72) Inventor: IOZZO, Felice, 36100 VICENZA (IT); ALPARSLAN, Emre Yigit, 36100 VICENZA (IT); ALAO, Olukayode, 36100 VICENZA (IT); FILIPPI, Marco, 36100 VICENZA (IT)
(74) Representative: Anselmi, Davide

(57) **Abstract**

A method and system for detecting and monitoring the driving behaviour of a driver (2) of a vehicle, comprising a step of creating an **ideal digital twin profile (6)** of the driver (2) with which several parameters of driving behaviour detected in a first predefined time period are associated, and of creating a **real profile (7)** of the driver (2) with which the same parameters of driving behaviour detected during a second time period are associated. Following a comparison, it is envisaged to update the data contained in said ideal digital twin profile (6) based on the detected differences.

## Description

### Technical field

The present invention relates to a method and a system for detecting and monitoring the driving behaviour of a driver of a vehicle.

In particular, the present method and system preferably refer to the detection of data relating to the driving behaviour of a driver for the purpose of monitoring and being able to calculate performances in terms of improvement or worsening.

### Prior art

In particular, the present invention is applied in the "car sharing" sector or more in general in the realm of shared mobility, including short- or long-term car rentals, in which cars are used by a number of different drivers with different driving styles, behaviours, ...

An example of prior art is described in document US2021/304313A1.

In the abovementioned sectors, there is a need to detect increasingly detailed driving parameters of the driver such as, for example: speed, acceleration, braking, observance of road traffic rules, ... for the purpose of determining:
- the driving style of a user;
- a rating associated with that user;
- the degree of wear of the vehicle;
- maintenance to be proposed for the vehicle,
- ....

In this reference framework, it is necessary to classify the driving behaviour of a user in an increasingly precise manner in order to be able to provide the car owner auto and/or the rental service and/or the insurance company with data that are sufficient to establish any risks of accidents/losses associated with a user and/or a vehicle.

In addition to this, as it has been found that users who use rental services tend to repeat it over time, a problem has emerged in that a same user may change his or her driving style over time and may thus improve or worsen his or her performance.

### Objects of the present invention

The technical task of the present invention is therefore to be able to provide a method and a system for detecting and monitoring the driving behaviour of a driver of a vehicle which are capable of overcoming the drawbacks which have emerged from the prior art.

The object of the present invention is thus to provide a method and a system for detecting and monitoring the driving behaviour of a driver of a vehicle which makes it possible to improve the overall evaluation of the user's driving behaviour.

Furthermore, an object of the present invention is thus to provide a method and a system for detecting and monitoring the driving behaviour of a driver of a vehicle which makes it possible to update the driving conditions of a same driver.

The specified technical task and the specified objects are substantially achieved by a method and a system for detecting and monitoring the driving behaviour of a driver of a vehicle comprising the technical features disclosed in one or more of the appended claims. The dependent claims correspond to possible embodiments of the invention.

Additional features and advantages of the present invention will emerge more clearly from the approximate and thus non-limiting description of an embodiment of a method and a system for detecting and monitoring the driving behaviour of a driver of a vehicle.

### Brief description of the figures

The description will be set forth below with reference to the appended drawings, provided solely for illustrative and, therefore, non-limiting purposes, in which:

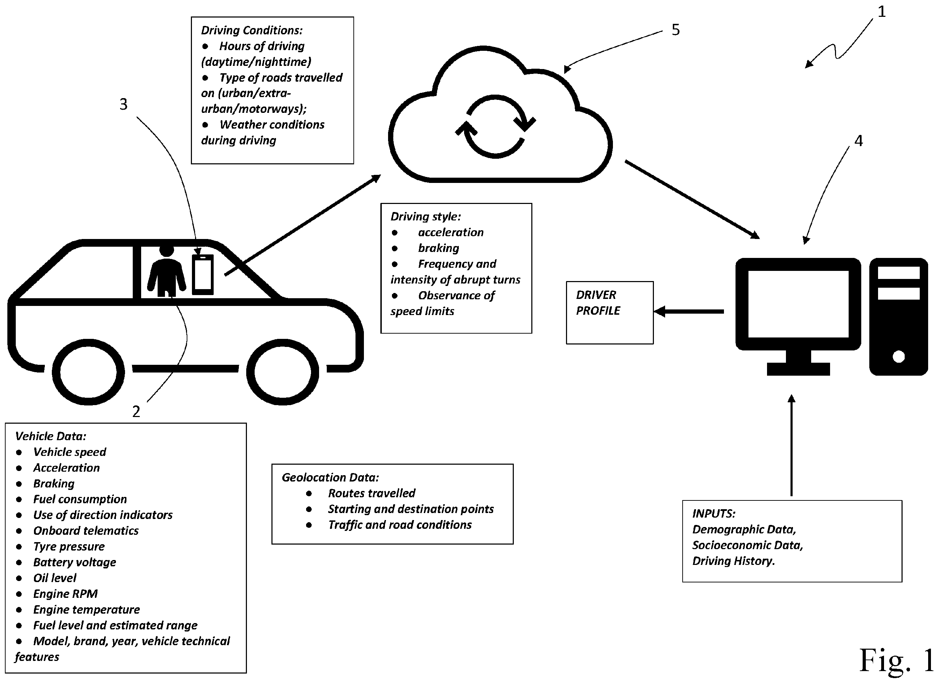

- Figure 1 is a schematic representation of a system for detecting the behaviour of a driver according to the present invention;

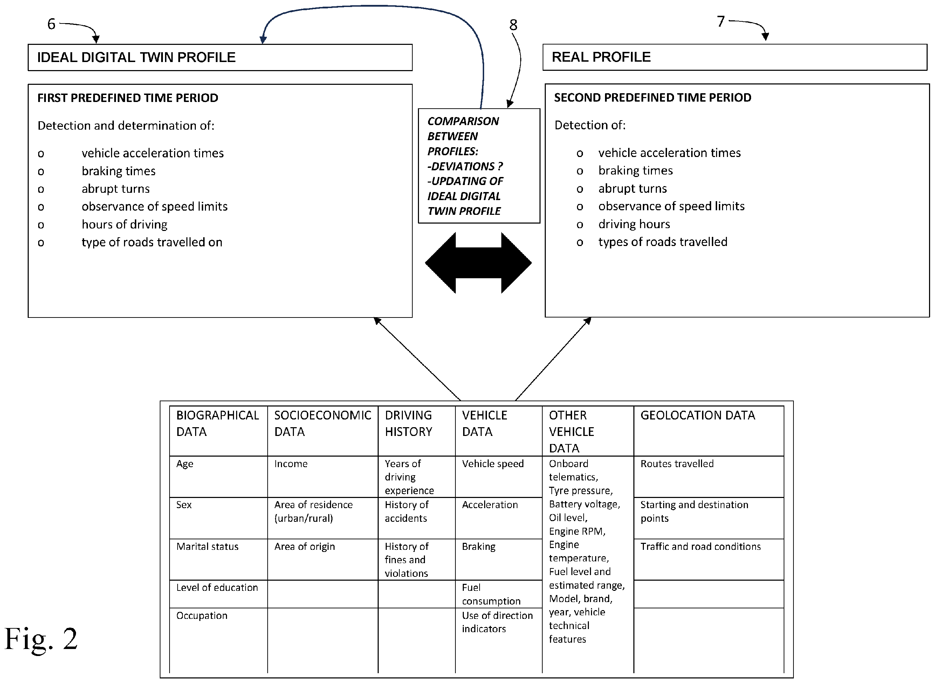

- Figure 2 is a schematic representation of the steps of a method for detecting the behaviour of a driver according to the present invention.

### Detailed description of at least one preferred embodiment of the present invention

With reference to the appended figures, 1 denotes overall a method and a system for detecting and monitoring the driving behaviour of a driver 2 of a vehicle.

The method envisages first detecting, in a first predefined time period of driving by the driver 2, by means of one or more detection sensors 3 (e.g. accelerometer, gyroscope, ...), one or more of the following parameters of driving behaviour:
∘ vehicle acceleration times imposed by the driver 2;
∘ braking times;
∘ abrupt turns;
∘ observance of speed limits;
∘ hours of driving;
∘ type of roads travelled on.

These data are crossed with other personal data to create an **ideal digital twin profile 6** of the driver 2 by means of a computer 4. The other personal data are:
∘ biographical data of the driver 2 (Age, Sex, Marital status, Level of education, Occupation);
∘ socioeconomic data of the driver 2 (Income, Area of residence - urban/rural, Area of origin);
∘ data relating to past driving experience (Years of driving experience, History of accidents, History of fines and violations).

Furthermore, the **ideal digital twin profile 6** of the driver 2 also contains other data relating, for example, to:
- REFERENCE DATA RELATING TO SOCIODEMOGRAPHIC CHARACTERISTICS of the driver (e.g. a male over 30 years old, degree holder -> falls into a certain data benchmark position);
- GEOLOCATION DATA (Routes travelled, Starting and destination points, Traffic and road conditions);
- VEHICLE DATA (Vehicle speed, Acceleration, Braking, Fuel consumption, Use of direction indicators, Onboard telematics, Tyre pressure, Battery voltage, Oil level, Engine RPM, Engine temperature, Fuel level and estimated range, Model, brand, year, vehicle technical features).

In other words, the ideal digital twin profile 6 relates to data collected in a first time period (e.g. past) and also contains data relating to the driver 2. In relation to the reference data relating to the socio-demographic characteristics of the driver, the method can envisage creating a reference data benchmark on the basis of the personal data entered in order to create positions that correspond to certain driving expectations. For example, a position can correspond to male drivers who are over 30 years old, hold a degree and are married, in relation to whom one expects a good, if not optimal, driving behaviour.

Thereafter, at every subsequent use of a vehicle (in other words in a second time period following the first), the method envisages repeating the detection of the same parameters of driving behaviour (repeated here for the sake of convenience):
∘ vehicle acceleration times;
∘ braking times;
∘ abrupt turns;
∘ observance of speed limits;
∘ hours of driving;
∘ type of roads travelled on;
∘ use of electronic devices (e.g. smartphone) while driving.

In the same manner, the method envisages creating, by means of said computer 4, a **real profile 7** of the driver 2 (relating precisely to this second time period) with which said parameters of driving behaviour detected during the second time period are associated, along with one or more of the following abovementioned items of personal data of the driver 2 (biographical data of the driver 2, socioeconomic data of the driver 2), optionally along with the vehicle and geolocation data identified above.

In accordance with the present invention, the method envisages comparing 8 said ideal digital twin profile 6 with said real profile 7 and detecting the differences at least in relation to one or more of the following parameters:
∘ vehicle acceleration times;
∘ braking times;
∘ abrupt turns;
∘ observance of speed limits;
∘ hours of driving;
∘ type of roads travelled on.

In this manner it is possible to:
- calculate the deviation of the detected values of a same parameter relative to the ideal digital twin profile 6 in order to evaluate whether for one or more of said parameters the driver 2 has improved or worsened his or her driving behaviour relative to respective pre-established improvement or worsening thresholds;
- update, by means of said computer 4, the data contained in said ideal digital twin profile 6 based on the detected differences, for the next comparison.

More specifically, the method envisages updating, by means of said computer 4, the data contained in said ideal digital twin profile 6 based on the detected differences in order to vary or maintain the values of the following driving parameters of said ideal digital twin profile 6:
∘ vehicle acceleration times;
∘ braking times;
∘ abrupt turns;
∘ observance of speed limits;
∘ hours of driving;
∘ type of roads travelled on;
∘ use of electronic devices during driving;

Finally, the method envisages repeating the steps of:
- detecting, in a further time period, following the first and the second, one or more of said parameters of driving behaviour (vehicle acceleration times, ...) by means of one or more of said detection sensors 3; and
- updating, by means of said computer 4, said real profile 7 of the driver 2 with which said parameters of driving behaviour detected during the further time period are associated, along with one or more of said items of personal data of the driver 2;
- again comparing 8, by means of said computer 4, said ideal digital twin profile 6 previously updated with said updated real profile 7 and detecting the differences at least in relation to said one or more of said parameters.

Finally, it is envisaged to update, by means of said computer 4, the data contained in said ideal digital twin profile 6 based on the detected differences.

According to a further peculiar aspect of the present invention, said real profile 7 is assigned a digital container which contains the points assigned for each drive. The method envisages increasing or decreasing the points contained in said digital container based on said evaluation relating to the fact that, for one or more of said parameters, the driver 2 has improved or worsened his or her driving behaviour during the second period of driving compared to the first.

It should be noted that the step of detecting the driving detection parameters takes place via an electronic terminal such as a smartphone 3 (which usually already incorporates a GPS and/or gyroscope) or via an electronic device integrated into the car.

The subject matter of the present invention further relates to a system for detecting and monitoring the driving behaviour of a driver 2 of a vehicle which directly derives from what was illustrated above, which is considered referenced in its entirety hereinbelow.

In particular, the system comprises a computer 4 configured to:
- detect, in a first predefined time period, by means of one or more detection sensors 3 one or more of the following parameters of driving behaviour:
   ∘ vehicle acceleration times;
   ∘ braking times;
   ∘ abrupt turns;
   ∘ observance of speed limits;
   ∘ hours of driving;
   ∘ type of roads travelled on;
- create an **ideal digital twin profile 6** of the driver 2 with which said detected parameters of driving behaviour are associated, along with one or more items of the following personal data of the driver 2:
   ∘ biographical data of the driver 2;
   ∘ socioeconomic data of the driver 2;
   ∘ data relating to past driving experience;
- detect, in a second time period, following the first, one or more of the following parameters of driving behaviour:
   ∘ vehicle acceleration times;
   ∘ braking times;
   ∘ abrupt turns;
   ∘ observance of speed limits;
   ∘ hours of driving;
   ∘ type of roads travelled on;
   ∘ use of electronic devices (e.g. smartphone) while driving.
- create a **real profile 7** of the driver 2 (preferably in electronic format) with which said parameters of driving behaviour detected during the second time period are associated, along with one or more items of the following personal data of the driver 2:
   ∘ biographical data of the driver 2;
   ∘ socioeconomic data of the driver 2.

Preferably, the computer 4 receives the data relating to the driving parameters of the driver 2 via a server 5 on which they are loaded after having been detected by the sensors 3.

The computer 4 is further configured to carry out the following further steps:
- comparing 8 said ideal digital twin profile 6 with said real profile 7 and detecting the differences at least in relation to one or more of the following parameters:
   ∘ vehicle acceleration times;
   ∘ braking times;
   ∘ abrupt turns;
   ∘ observance of speed limits;
   ∘ hours of driving;
   ∘ type of roads travelled on;
- updating the data contained in said ideal digital twin profile 6 based on the detected differences in order to vary or maintain the values of the following driving parameters of said ideal digital twin profile 6:
   ∘ vehicle acceleration times;
   ∘ braking times;
   ∘ abrupt turns;
   ∘ observance of speed limits;
   ∘ hours of driving;
   ∘ type of roads travelled on;
   ∘ use of electronic devices during driving.

The computer 4 is further configured to:
- detect, in a further time period, following the first and the second, one or more of said parameters of driving behaviour by means of one or more of said detection sensors 3; and
- update said **real profile 7** of the driver 2 with which said parameters of driving behaviour detected during the further time period are associated, along with one or more of said items of personal data of the driver 2;
- again compare 8 said ideal digital twin profile 6 previously updated with said updated real profile 7 and detect the differences at least in relation to said one or more of said parameters;
- update the data contained in said ideal digital twin profile 6, by means of said computer 4, based on the detected differences.

Furthermore, in accordance with what was previously illustrated for the method, the computer 4 is configured to carry out said step of comparing 8 said ideal digital twin profile 6 with said real profile 7, which comprises evaluating whether for one or more of said parameters the driver 2 has improved or worsened his or her driving behaviour relative to respective pre-established improvement or worsening thresholds.

In addition, the computer 4 is configured to associate said real profile 7 with a digital container which contains points assigned for every drive; said computer 4 being further configured to increase or decrease the points contained in said digital container based on said evaluation relating to the fact that, for one or more of said parameters, the driver 2 has improved or worsened his or her driving behaviour.

Finally, said step of detecting the driving detection parameters takes place via an electronic terminal such as a smartphone or via an electronic device integrated into the car.

The present invention achieves the following advantages.

Advantageously, the creation of the ideal digital twin profile 6 makes it possible to maintain control over variations in driving style that may involve a driver 2.

Furthermore, the present invention enables the driving style to be monitored more efficiently and points to be assigned in a more precise manner.

## Claims

1. A method for detecting and monitoring the driving behaviour of a driver (2) of a vehicle, comprising the following operating steps:
- detecting, in a first predefined time period of driving by the driver (2), by means of one or more detection sensors (3), one or more of the following parameters of driving behaviour:
∘ vehicle acceleration times;
∘ braking times;
∘ abrupt turns;
∘ observance of speed limits;
∘ hours of driving;
∘ type of roads travelled on;
∘ use of electronic devices during driving;
- creating, by means of a computer (4), an **ideal digital twin profile (6)** of the driver (2) with which said parameters of driving behaviour detected in said first period of time are associated, along with one or more of the following items of personal data of the driver (2):
∘ biographical data of the driver (2);
∘ socioeconomic data of the driver (2);
∘ data relating to past driving experience;
- detecting, in a second time period, following the first and relating to a period of driving of the driver (2) following the first, one or more of the following parameters of driving behaviour by means of one or more of said detection sensors (3):
∘ vehicle acceleration times;
∘ braking times;
∘ abrupt turns;
∘ observance of speed limits;
∘ hours of driving;
∘ type of roads travelled on;
- creating, by means of said computer (4), a **real profile (7)** of the driver (2) with which said parameters of driving behaviour detected during the second time period are associated, along with one or more of the following items of personal data of the driver (2):
∘ biographical data of the driver (2);
∘ socioeconomic data of the driver (2);
said method being **characterised in that** it comprises the following additional steps:
- comparing (8), by means of said computer (4), said ideal digital twin profile (6) with said real profile (7) and detecting the differences relating at least to one or more of the following parameters:
∘ vehicle acceleration times;
∘ braking times;
∘ abrupt turns;
∘ observance of speed limits;
∘ hours of driving;
∘ type of roads travelled on;
∘ use of electronic devices during driving;
- updating, by means of said computer (4), the data contained in said ideal digital twin profile (6) based on said detected differences in order to vary or maintain the values of the following driving parameters of said ideal digital twin profile (6):
∘ vehicle acceleration times;
∘ braking times;
∘ abrupt turns;
∘ observance of speed limits;
∘ hours of driving;
∘ type of roads travelled on;
∘ use of electronic devices during driving;
- repeating the steps of:
• detecting, in a further time period, following the first and the second, one or more of said parameters of driving behaviour by means of one or more of said detection sensors (3); and
• updating, by means of said computer (4), said **real profile (7)** of the driver (2) with which said parameters of driving behaviour detected during the further time period are associated, along with one or more of said items of personal data of the driver (2);
• again comparing (8), by means of said computer (4), said ideal digital twin profile (6) previously updated with said real updated real profile (7) and detecting the differences at least in relation to one or more of said parameters;
• updating, by means of said computer (4), the data contained in said ideal digital twin profile (6) based on the detected differences.

2. The method according to claim 1, wherein said step of comparing (8) said ideal digital twin profile (6) with said real profile (7) comprises evaluating whether for one or more of said parameters the driver (2) has improved or worsened his or her driving behaviour relative to respective pre-established improvement or worsening thresholds.

3. The method according to claim 2, wherein said real profile (7) is assigned a digital container which contains points assigned for every drive; the method comprises increasing or decreasing the points contained in said digital container based on said evaluation relating to the fact that, for one or more of said parameters, the driver (2) has improved or worsened his or her driving behaviour.

4. The method according to any one of the preceding claims, wherein said step of detecting the parameters of driving behaviour takes place via an electronic terminal such as a smartphone or via an electronic device integrated into the car.

5. The method according to any one of the preceding claims, wherein the ideal digital twin profile 6 of the driver 2 also contains reference data relating to the sociodemographic characteristics of the driver.

6. A system for detecting and monitoring the driving behaviour of a driver (2) of a vehicle, comprising a computer (4) configured to:
- detect, in a first predefined time period of driving by the driver (2), by means of one or more detection sensors (3), one or more of the following parameters of driving behaviour:
∘ vehicle acceleration times;
∘ braking times;
∘ abrupt turns;
∘ observance of speed limits;
∘ hours of driving;
∘ type of roads travelled on;
∘ use of electronic devices during driving;
- create an **ideal digital twin profile (6)** of the driver (2) with which said parameters of driving behaviour detected in said first time period are associated, along with one or more items of the following personal data of the driver (2):
∘ biographical data of the driver (2);
∘ socioeconomic data of the driver (2);
∘ data relating to past driving experience;
- detect, in a second time period, following the first and relating to a period of driving of the driver (2) following the first, one or more of the following parameters of driving behaviour by means of one or more of said detection sensors (3):
∘ vehicle acceleration times;
∘ braking times;
∘ abrupt turns;
∘ observance of speed limits;
∘ hours of driving;
∘ type of roads travelled on;
∘ use of electronic devices during driving;
- create a **real profile (7)** of the driver (2) with which said parameters of driving behaviour detected during the second time period are associated, along with one or more of the following items of personal data of the driver (2):
∘ biographical data of the driver (2);
∘ socioeconomic data of the driver (2);
said system being **characterised in that** the computer (4) is further configured to carry out the following additional steps:
- comparing (8) said ideal digital twin profile (6) with said real profile (7) and detecting the differences relating at least to one or more of the following parameters:
∘ vehicle acceleration times;
∘ braking times;
∘ abrupt turns;
∘ observance of speed limits;
∘ hours of driving;
∘ type of roads travelled on;
- updating the data contained in said ideal digital twin profile (6) based on said detected differences in order to vary or maintain the values of the following driving parameters of said ideal digital twin profile (6):
∘ vehicle acceleration times;
∘ braking times;
∘ abrupt turns;
∘ observance of speed limits;
∘ hours of driving;
∘ type of roads travelled on;
∘ use of electronic devices during driving;
- said computer being further configured to:
• detect, in a further time period, following the first and the second, one or more of said parameters of driving behaviour by means of one or more of said detection sensors (3); and
• update said **real profile (7)** of the driver (2) with which said parameters of driving behaviour detected during the further time period are associated, along with one or more of said items of personal data of the driver (2);
• again compare (8) said ideal digital twin profile (6) previously updated with said updated real profile (7) and detect the differences at least in relation to said one or more parameters;
• update, by means of said computer (4), the data contained in said ideal digital twin profile (6) based on said detected differences.

7. The system according to claim 6, wherein said computer (4) is configured to carry out said step of comparing (8) said ideal digital twin profile (6) with said real profile (7), which comprises evaluating whether for one or more of said parameters the driver (2) has improved or worsened his or her driving behaviour relative to respective pre-established improvement or worsening thresholds.

8. The system according to claim 7, wherein said computer (4) is configured to associate said real profile (7) with a digital container which contains points assigned for every drive; said computer (4) being further configured to increase or decrease the points contained in said digital container based on said evaluation relating to the fact that, for one or more of said parameters, the driver (2) has improved or worsened his or her driving behaviour.

9. The system according to any one of claims 6 to 8, wherein said step of detecting the parameters of driving behaviour takes place via an electronic terminal such as a smartphone or via an electronic device integrated into the car.

10. The system according to any one of claims 6 to 9, wherein the ideal digital twin profile 6 of the driver 2 also contains reference data relating to the sociodemographic characteristics of the driver.
